(19) Europäisches Patentamt
European Patent Office
Office européen des brevets

(11) Veröffentlichungsnummer: **0 199 023**
**A1**

(12) **EUROPÄISCHE PATENTANMELDUNG**

(21) Anmeldenummer: **86102563.3**

(51) Int. Cl.4: **B01D 53/34** , C04B 7/42

(22) Anmeldetag: **27.02.86**

(30) Priorität: **16.04.85 DE 3513484**

(43) Veröffentlichungstag der Anmeldung:
**29.10.86 Patentblatt 86/44**

(84) Benannte Vertragsstaaten:
**BE DE FR GB IT**

(71) Anmelder: **Krupp Polysius AG**
**Graf-Galen-Strasse 17**
**D-4720 Beckum(DE)**

(72) Erfinder: **Kreft, Wilfried, Dipl.-Ing.**
**Kirschweg 12**
**D-4722 Ennigerloh(DE)**

(74) Vertreter: **Tetzner, Volkmar, Dr.-Ing. Dr. Jur.**
**Van-Gogh-Strasse 3**
**D-8000 München 71(DE)**

(54) **Verfahren zur Verringerung der Stickoxid-Emission aus Zementbrennanlagen.**

(57) Die Erfindung betrifft ein Verfahren zur Verringerung der Stickoxid-Emission aus Zementbrennanlagen, wobei den Heißgasen $NH_4$-Verbindungen in Feststoff-Form zugegeben werden. Auf diese Weise erreicht man bei einfacher Handhabung des Reduktionsmittels einen besonders wirksamen $NO_x$-Abbau.

EP 0 199 023 A1

Rank Xerox

# Verfahren zur Verringerung der Stickoxid-Emission aus Zementbrennanlagen

Die Erfindung betrifft ein Verfahren entsprechend dem Oberbegriff des Anspruches 1.

Zementbrennanlagen haben im allgemeinen eine bestimmte Emission von Stickoxiden (NO, $NO_2$). $NO_x$wird beim Brennprozeß einerseits durch thermische Synthese aus elementarem Stickstoff und Sauerstoff der Verbrennungsluft gebildet - (thermisches $NO_x$) und entsteht zum andern bei der Verbrennung von stickstoffhaltigen organischen Bestandteilen des Brennstoffes (Brennstoff-$NO_x$).

Das zunehmende Umweltbewußtsein und die immer schäferen behördlichen Auflagen bezüglich der Grenzwerte an umweltrelevanten Schadstoffen machen es nun auch für die Zementindustrie notwendig, die Stickoxid-Emission zu verringern. Hierfür bieten sich einerseits primäre Maßnahmen im Brennprozeß an (Optimierung der Brenntemperatur und des Luftüberschusses). Möglich sind weiterhin sekundäre Maßnahmen (Rauchgaswäsche), die zwar wirksam, jedoch auch sehr kostspielig sind.

Nun ist aus der Kraftwerkstechnik bekannt, daß durch Zugabe von Ammoniak ($NH_3$) in Gegenwart von Katalysatoren NO und $NO_2$ wirksam abgebaut werden können.

Im Temperaturbereich zwischen 300 und 350°C laufen dann folgende Reaktionen ab:

$$4\ NO + 4\ NH_3 + O_2 \rightleftharpoons 4\ N_2 + 6\ H_2O$$

$$2\ NO_2 + 4\ NH_3 + O_2 \rightleftharpoons 3\ N_2 + 6\ H_2O$$

Aus "I.C.S. Proceedings", 1979, S.42-47, ist es ferner bei Zementbrennanlagen bekannt, die Stickoxid-Emission durch Zugabe von $NH_3$ im Temperaturbereich zwischen 800 und 900°C zu verringern. Nachteilig ist hierbei jedoch die schwierige Handhabung von $NH_3$, das ätzend ist und hohe Sicherheitsmaßnahmen erforderlich macht.

Der Erfindung liegt daher die Aufgabe zugrunde, ein Verfahren entsprechend dem Oberbegriff des Anspruches 1 so auszubilden, daß mit einem geringen betrieblichen Aufwand die Stickoxid-Emission aus Zementbrennanlagen besonders wirksam verringert wird.

Diese Aufgabe wird erfindungsgemäß durch das kennzeichnende Merkmal des Anspruches 1 gelöst.

Indem den Heißgasen $NH_4$-Verbindungen in Feststoff-Form in einem Brennstoff-und/oder Gutstrom zugegeben werden, erreicht man nicht nur eine bequeme Handhabung dieses Reduktionsmittels, sondern gewährleistet vor allem einen sehr wirksamen Abbau des $NO_X$. Bei der bekannten Zugabe von $NH_3$ muß sich dieses gleichmäßig im Gasraum verteilen, um das $NO_X$ wirksam zu reduzieren; diese Verteilung des $NH_3$ im Gasraum erfordert einen hohen Turbulenzgrad. Werden demgegenüber bei dem erfindungsgemäßen Verfahren $NH_4$-Verbindungen in Feststoff-Form in einem Brennstoff-und/oder Gutstrom in das $NO_x$-haltige Gas eingeführt, so ergibt sich der Vorteil einer sehr gelichmäßigen Verteilung der $NH_4$-Verbindungen über den gesamten Gasraum, da parallel zur Verbrennung des Brennstoffes die $NH_3$-Abspaltung aus den $NH_4$-Verbindungen erfolgt und das $NH_3$ damit räumlich in unmittelbarer Nähe der Stellen freigesetzt wird, an denen insbesondere das Brennstoff-NO (d.h. das aus Brennstoff-Stickstoff gebildete NO) entsteht. Auch das im Drehrohrofen entstandene thermische NO wird bei dem erfindungsgemäßen Verfahren spontan und mit hohen Wirkungsgrad abgebaut.

Im Rahmen des erfindungsgemäßen Verfahrens können praktisch alle $NH_4$-Salzverbindungen verwendet werden, beispielsweise $(NH_4)_2CO_3$, $NH_4HCO_3$, $NH_4Cl$, $(NH_4)_2S_2O_7$ usw. Bevorzugt werden solche Verbindungen, die keine Problemstoffe, wie Chloride und Sulfate, in den Brennstoff bringen, d.h. neutrale Stoffe, wie z.B. $(NH_4)_2CO_3$ oder $NH_4HCO_3$, die nur $NH_3$, $CO_2$ und $H_2O$ entstehen lassen.

Eine mögliche Spaltreaktion ist beispielsweise

$$(NH_4)_2CO_3 \rightarrow 2NH_3 + CO_2 + H_2O$$

Die einzusetzenden Mengen an $NH_4$-Verbindungen sollen etwa dem stöchiometrischen Verhältnis $NH_3$/NO entsprechen:

$$4\ NH_3 + 4\ NO + O_2 \rightarrow 4\ N_2 + 6\ H_2O$$

Geregelt wird zweckmäßig durch Verknüpfung der NO-Emmissionsmessung (kontinuierliche Analyse) mit der Dosierung an $NH_4$-Verbindungen.

Besonders zweckmäßig ist die Zugabe der $NH_4$-Verbindungen zum Brennstoffstrom - (Kohlestrom). In Fällen, in denen das Zementrohmaterial auch Stickstoff enthält, der zu NO reagieren kann (was nach amerikanischen Untersuchungen bei vielen Rohstoffen der Fall ist), ist eine Verteilung der $NH_4$-Verbindungen auf den Brennstoff-und Gutstrom vorteilhaft.

In Versuchen wurde ermittelt, daß ein nennenswerter NO-Abbau bereits durch Zugabe geringer Mengen von $NH_4$-Verbindungen erreicht werden kann. Dabei steigt der NO-Abbau mit zunehmendem CO-Gehalt der Ofenatmosphäre. Dieser Minderungseffekt wird in Gegenwart von Rohmehl wesentlich vergrößert, was einen katalytischen Einfluß der heißen Rohmehloberfläche auf die Reduktionsreaktion beweist.

Bei Calciniertemperaturen von 880°C wird dabei wesentlich mehr NO abgebaut als bei Temperaturen von 1000°C (in Gegenwart von CO oder Kohle).

In der Zeichnung ist die Durchführung des erfindungsgemäßen Verfahrens schematisch veranschaulicht.

Die Zeichnung zeigt eine Zementbrennanlage, enthaltend einen (nur teilweise dargestellten) mehrstufigen Zyklonvorwärmer 1, einen Drehrohrofen 2 und einen (nicht veranschaulichten) Kühler. Die heißen Abgase des Drehrohrofens 1 strömen durch eine Gasleitung 3, die eine Vorcalcinationszone bildet, zu den untersten Zyklonen 1a, 1b des Zyklonvorwärmers 1.

Vom Kühler führt eine Kühlluftleitung 4 zur Gasleitung 3 und mündet über zwei Teilleitungen 4a, 4b in die Gasleitung 3 ein.

Das aus dem Zyklon 1c des Zyklonvorwärmers 1 ausgetragene Gut wird über Gutleitungen 5a, 5b in die Leitungen 4a, 4b eingetragen und mit diesem Luftstrom in die Gasleitung 3 eingeführt, die die Vorcalcinationszone bildet.

Brennstoff wird über Brenner 6 in die Gasleitung 3 eingeführt.

Das aus den Zyklonen 1a, 1b ausgetragene Gut gelangt über Gutleitungen 7a, 7b in den Drehrohrofen 2.

Die Funktion einer derartigen Zementbrennanlage ist bekannt und braucht daher im einzelnen nicht erläutert zu werden. Das im Zyklonvorwärmer 1 vorgewärmte Zementrohmaterial wird in der von der Gasleitung 3 gebildeten Vorcalcinationszone weiter erhitzt und zumindest teilweise entsäuert, ehe es zum Fertigbrennen in den Drehrohrofen 2 gelangt. Die notwendige Verbrennungsluft für die Verbrennung des über die Brenner 6 der Volcalcinationszone zugeführten zusätzlichen Brennstoffes wird über die Kühlluftleitung 4 zugeführt.

Die Anlage enthält nun einen Vorratsbehälter 8 für $NH_4$-Verbindungen in Feststoff-Form, beispielsweise $(NH_4)_2CO_3$. Über ein Dosierorgan 9 und eine nicht im einzelnen dargestellte Verteilereinrichtung können die $NH_4$-Verbindungen aus dem Vorratsbehälter 8 sowohl dem über den Brenner 6 zugeführten Brennstoff (beispielsweise Feinkohle), als auch dem über die Gutleitungen 7a, 7b dem Drehrohrofen 2 zugeführten Gutstrom zugesetzt werden. Eine weitere, in der Zeichnung angedeutete Möglichkeit besteht darin, die $NH_4$-Verbindungen unmittelbar in das Einlaufgehäuse 10 des Drehrohrofens 2 einzubringen.

**Ansprüche**

1. Verfahren zur Verringerung der Stickoxid-Emission aus Zementbrennanlagen durch Reduktion von in Heißgasen der Zementbrennanlage enthaltenem $NO_x$ mittels $NH_3$ im Temperaturbereich zwischen 800 und 900°C, dadurch gekennzeichnet,

daß den Heißgasen $NH_4$-Verbindungen in Feststoff-Form, vorzugsweise in einem Brennstoff-und/oder Gutstrom, zugegeben werden.

2. Verfahren nach Anspruch 1, bei dem das vorgewärmte Zementrohmaterial vor Eintritt in den Drerohrofen in einer Vorcalcinationszone mittels zusätzlichen Brennstoffes erhitzt und zumindest teilweise entsäuert wird, dadurch gekennzeichnet, daß die $NH_4$-Verbindungen zusammen mit dem Brennstoff in die Vorcalcinationszone eingeführt werden.

3. Verfahren nach Anspruch 1, insbesondere für stickstoffhaltiges Zementrohmaterial, wobei das vorgewärmte Zementrohmaterial vor Eintritt in den Drehrohrofen in einer Vorcalcinationszone mittels zusätzlichen Brennstoffes erhitzt und zumindest teilweise entsäuert wird, da durch gekennzeichnet, daß ein Teil der $NH_4$-Verbindungen zusammen mit dem Brennstoff in die Vorcalcinationszone eingeführt wird und ein weiterer Teil der $NH_4$-Verbindungen einem Strom von vorgewärmten und/oder vorcalciniertem Rohmaterial zugesetzt wird.

4. Verfahren nach Anspruch 1, gekennzeichnet durch die Verwendung solcher $NH_4$-Verbindungen, wie $(NH_4)_2CO_3$ oder $NH_4HCO_3$ , die bei der Zersetzung nur $NH_3$, $CO_2$ und $H_2O$ entstehen lassen.

5. Verfahren nach Anspruch 1, dadurch gekennzeichnet, daß die einzusetzenden Mengen an $NH_4$-Verbindungen etwa dem stöchiometrischen Verhältnis $NH_3/NO$ entsprechen.

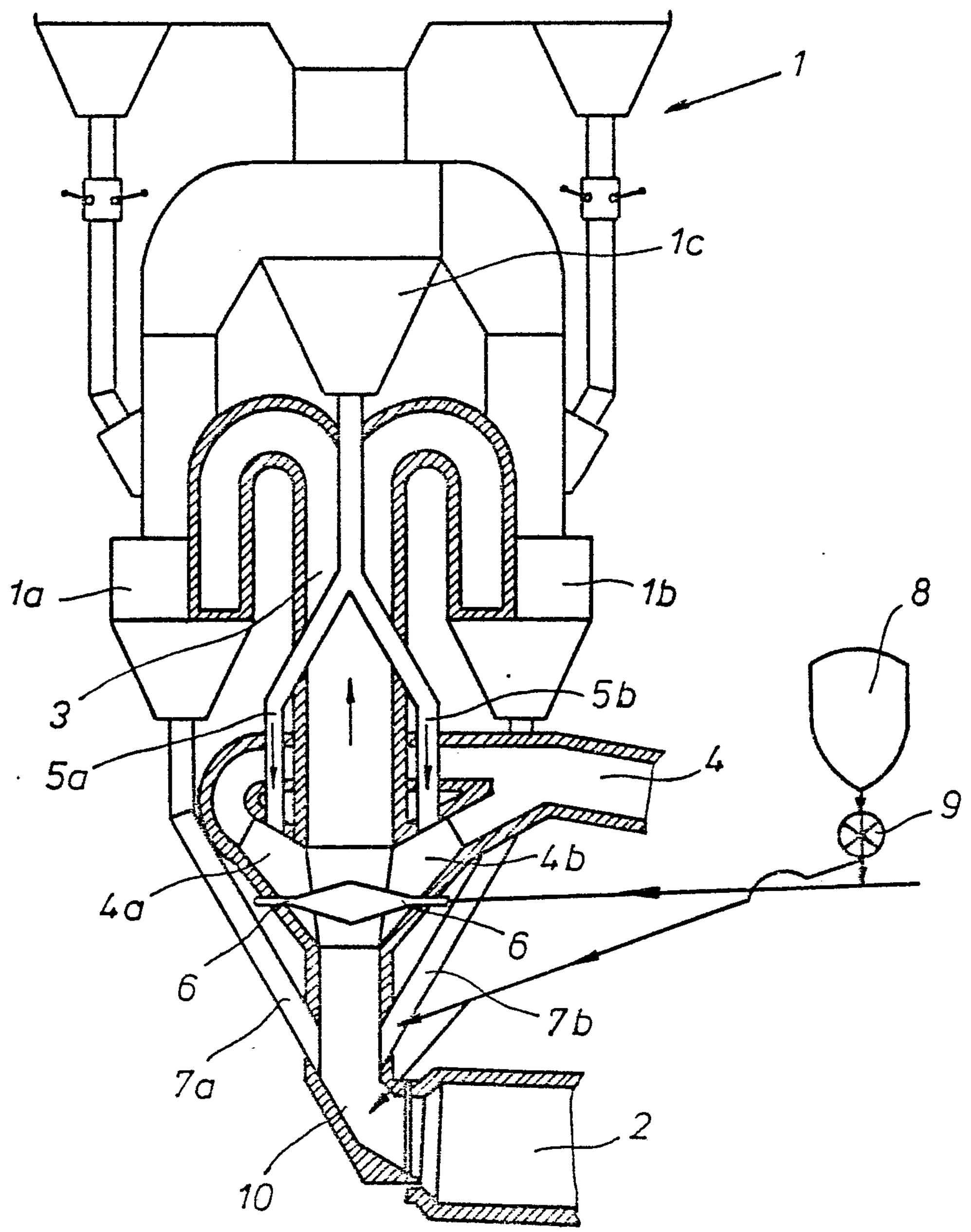
1
1c
1a
1b
8
3
5b
5a
4
9
4b
4a
6
6
7b
7a
2
10

Europäisches Patentamt

# EUROPÄISCHER RECHERCHENBERICHT

Nummer der Anmeldung

EP 86 10 2563

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 318 835 (ISHIKAWAJIMA-HARIMA) * Seite 3, Zeile 16 - Seite 5, Zeile 29; Figur * | 1,4,5 | B 01 D 53/34<br>C 04 B 7/42 |
| | --- | | |
| Y | US-A-4 181 705 (R.J. GUMERMAN) * Insgesamt * | 1,4,5 | |
| | ----- | | |
| | | | RECHERCHIERTE SACHGEBIETE (Int. Cl.4) |
| | | | B 01 D<br>C 04 B |

Der vorliegende Recherchenbericht wurde für alle Patentansprüche erstellt.

| Recherchenort | Abschlußdatum der Recherche | Prüfer |
|---|---|---|
| DEN HAAG | 08-07-1986 | PYFFEROEN K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82